# FASCICULE DE BREVET EUROPEEN

(11) **EP 0 628 257 B1**
(45) Date de publication et mention de la délivrance du brevet: **29.12.1997**
(21) Numéro de dépôt: 94401300.2
(22) Date de dépôt: 09.06.1994
(51) Int. Cl.: A23K 1/16, A23K 1/18

(54) **Procédé de protection des acides aminés vis à vis de la dégradation ruminale et complexe alimentaire pour ruminant obtenu par le procédé**
Verfahren zum Schützen von Aminosäuren gegen Abbau im Pansen von Wiederkäuern und durch diesen Prozess erhaltener Futterkomplex für Wiederkäuer
Process for the protection of amino acids against ruminal degradation and feed complex for ruminants, obtained by this process

(30) Priorité: 11.06.1993 FR 9307215
(43) Date de publication de la demande: 14.12.1994
(73) Titulaire: LA NOELLE SERVICES, COOPERATIVE d'INTERET COLLECTIF AGRICOLE, F-44150 Ancenis (FR)
(72) Inventeur: Moncoulon, Raymond, F-31830 Plaisance du Touch (FR); Bayourthe, Corinne, F-31300 Toulouse (FR)
(74) Mandataire: Phélip, Bruno

(56) Documents cités:
- EP-A- 0 283 969
- EP-A- 0 284 186
- EP-A- 0 284 548
- WO-A-81/00342
- WO-A-91/05482
- WO-A-93/25616
- FR-A- 2 249 623
- FR-A- 2 270 804
- PATENT ABSTRACTS OF JAPAN vol. 9, no. 306 (C-317) (2029) 3 Décembre 1985 & JP-A-60 145 060 (AAGERU SHIYOKUHIN KK) 31 Juillet 1985
- REPRODUCTION, NUTRITION, DEVELOPMENT, vol.31, no.6, 1991 pages 655 - 665 C. BENCHAAR ET AL. 'Digestion ruminale et absorption intestinale des protéines du lupin extrudé chez la vache laitière'

## Description

La présente invention a trait au domaine général de l'agro-alimentaire ; elle concerne plus particulièrement un procédé de protection d'acides aminés libres vis à vis de la dégradation ruminale ainsi que le complexe alimentaire pour ruminants obtenu par le procédé.

Les ruminants ont des besoins azotés qu'il convient de satisfaire afin d'assurer une extériorisation optimale de leurs potentialités de production. Bien que l'énergie soit le facteur principal, le niveau des apports et la qualité des composés azotés de la ration ont une influence fondamentale dans l'utilisation métabolique des aliments et, par voie de conséquence, sur les performances zootechniques de l'animal.

On considère que les protéines microbiennes constituent la part la plus importante pour la couverture des besoins azotés chez la vache laitière haute productrice (VLHP). De ce fait, pour être efficace, tout système d'alimentation doit être orienté vers une optimisation des fermentations ruminales et des synthèses protéiques bactériennes.

Toutefois, s'il semble nécessaire d'accroître la production de protéines microbiennes, celles-ci ne peuvent entièrement couvrir les besoins azotés requis pour une forte production. Cet écart se creuse d'autant plus que la production de lait s'intensifie et que la capacité d'ingestion de l'animal est réduite (VLHP en début de lactation). Afin de satisfaire les besoins en azote fermentescible de la population microbienne et ceux en acides aminés de l'animal hôte, il apparaît indispensable d'augmenter l'efficacité des protéines de la ration.

Jusqu'à présent, la stratégie d'alimentation de la VLHP était établie, pour une couverture globale des besoins azotés, par un apport de protéines digestibles dans l'intestin (protéines alimentaires et microbiennes). Mais ce système est en train d'évoluer et l'aspect qualitatif des protéines est de plus en plus pris en compte.

De nombreuses études tentent d'évaluer le besoin en acides aminés des ruminants et mettent en évidence l'existence d'acides aminés limitants qui, amenés au niveau de l'abomasum, permettent un accroissement des performances de l'animal.
Chez la vache laitière, la méthionine et la lysine sont identifiées comme premiers facteurs limitants pour les rations à base d'ensilage de maïs (RULQUIN H. 1987, "Détermination de certains acides aminés limitants chez la vache laitière par la méthode des administrations postruminales", Reprod. Nutr. Develop., 27 : 299-300).
Les documents EP-A-0 283 969, EP-A-0 284 548 et FR-A-2 249 623 décrivent des aliments pour ruminants.

En règle générale, aucun effet n'est observé sur les performances des animaux lorsque l'apport d'acides aminés libres est directement réalisé dans la ration, et sans précaution particulière, alors qu'une perfusion de ces acides aminés dans la caillette ou le duodénum s'accompagne souvent d'une réponse zootechnique.
L'absence de réponse, au niveau de la production laitière, à un apport d'acides aminés libres dans la ration est expliquée par une dégradation rapide (désamination) de ces molécules dans la panse (REMOND B. 1989, "Effet de l'apport de DL méthionine, protégée de sa dégradation dans le rumen, aux vaches laitières pendant le tout début de lactation". Ann. Zoot., 38 : 129-137). Pour que l'animal puisse bénéficier de ces acides aminés, il s'avère donc indispensable de les soustraire à la dégradation microbienne.

Récemment, de nombreuses études ont porté sur les possibilités de protection des acides aminés de synthèse et plus particulièrement sur celles de la méthionine et de la lysine. Différentes formes de protection (analogues et polymères d'acides aminés ; enrobage par des matrices de nature variée) ont été proposées. Ainsi, certains procédés reposent sur l'utilisation de microsphères protectrices à dissolution contrôlée. Elles présentent l'inconvénient majeur, pour certaines, de ne pas être compatibles avec l'économie des productions animales ou, pour d'autres, de ne pas résister à la granulation lors de la fabrication des aliments.

L'objet de la présente invention est de proposer un nouveau procédé de protection des acides aminés libres vis-à-vis de la dégradation ruminale. Ce procédé peut être mis en oeuvre par les techniques usuelles utilisées dans le domaine de la fabrication d'aliments ; il utilise des constituants classiques et peu onéreux qui lui permettent d'être économiquement acceptable.

Selon l'invention, ce procédé consiste à complexer le ou les acides aminés que l'on désire protéger avec un sucre réducteur, et ceci au moyen d'un traitement hydrothermique conduit par cuisson-extrusion avec un support alimentaire, lequel traitement entraîne la condensation d'une molécule d'acide aminé et d'une molécule de sucre réducteur. On crée ainsi une liaison chimique entre l'acide aminé et le sucre qui protège l'acide aminé des attaques bactériennes.
Le complexe obtenu peut être utilisé à titre de constituant ou d'additif alimentaire pour polygastrique. Le traitement appliqué entraîne une importante diminution de la dégradation des matières azotées dans le rumen des bovins. Il apparaît un effet de protection qui n'altère pas ou qui n'altère que très légèrement la digestion enzymatique dans la caillette et l'intestin, des matières azotées résiduelles de la dégradation ruminale.

Une telle réaction est déjà connue dans le domaine de l'agro-alimentaire et plus particulièrement dans le domaine de l'alimentation animale ; elle est plus généralement connue sous le nom de réaction de MAILLARD mais, étant donné ses caractéristiques, on cherche toujours à l'éviter ou, tout au moins à la limiter dans ses effets.
La réaction de MAILLARD a été décrite par BALTES W. en 1982 ("Chemical changes in food by Maillard Reaction".Food Chemistry, 9 : 59-73). Elle correspond à un ensemble très complexe de réactions qui résultent d'une condensation entre la fonction carbonyle d'un sucre réducteur et un groupe aminé libre (acide aminé, peptide, protéine), consécutive à un traitement thermique ; elle aboutit dans la phase ultime à la formation de pigments bruns ou noirs : les mélanoïdines, et elle entraîne un blocage des acides aminés.

Les substrats de cette réaction sont des composés carbonylés et en premier lieu des sucres réducteurs (composés polyhydroxy-carbonylés). D'autres composés à fonction carbonyle interviennent aussi ; c'est le cas des vitamines (acide ascorbique, vitamine K, orthophénols, produits d'oxydation des lipides et arômes naturels comme l'aldéhyde cinnamique et la vanilline).

Le brunissement non enzymatique se manifeste lors des traitements technologiques ou du stockage de divers aliments. Il est accéléré par la chaleur et apparaît tout particulièrement lors des opérations de cuisson (autoclavage ou cuisson-extrusion).

Le sort de l'acide aminé dépend de :
- la position de l'acide aminé dans la molécule protidique et la possibilité de présenter un groupement aminé libre,
- la nature des glucides de l'aliment et de leur réactivité dans la réaction de MAILLARD,
- l'existence possible de phénomènes associés ou secondaires de la réaction de MAILLARD, interférant avec la stabilité des acides aminés et pouvant, par exemple, entraîner leur destruction par oxydation,
- de paramètres influant sur la réaction : température, humidité, pH.

On enregistre avec des intensités variables des brunissements, des dégagements de gaz carbonique, des blocages et des destructions d'acides aminés, ainsi qu'une disparition rapide du sucre réducteur accompagnée de la formation de substances réductrices.

Le schéma simplifié de la réaction de MAILLARD est le suivant (CHEFTEL J.C. et CHEFTEL H. (1990).III.3. Brunissement non enzymatique dans "Introduction à la biochimie et à la technologie des aliments". Vol. 1, Technique et documentation - Lavoisier, Paris, p. 381) :

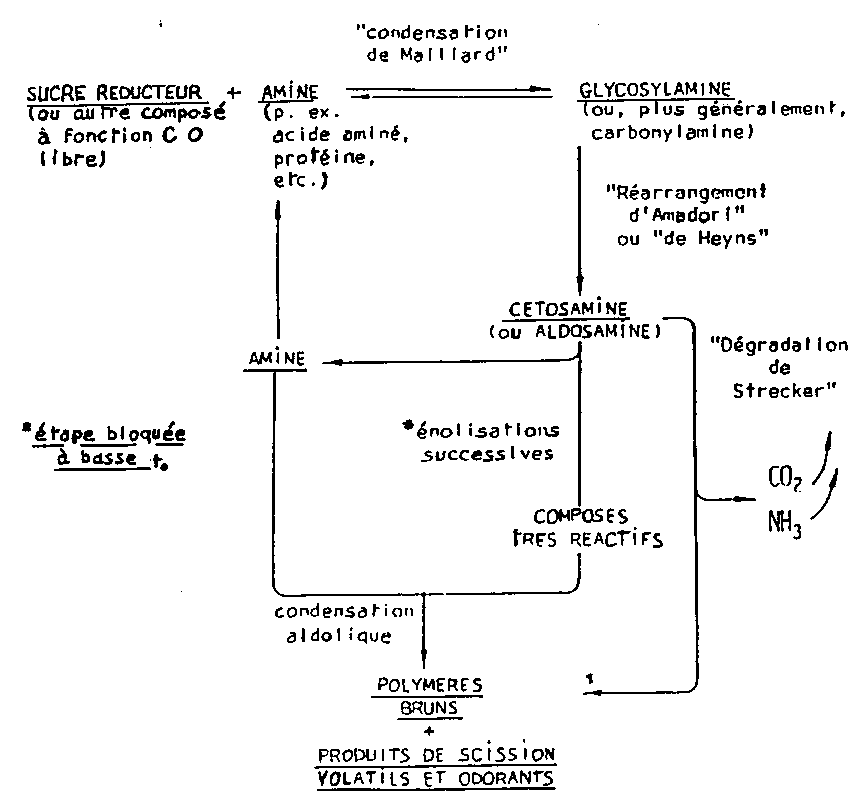

Le schéma de la première étape (condensation de MAILLARD) est le suivant :

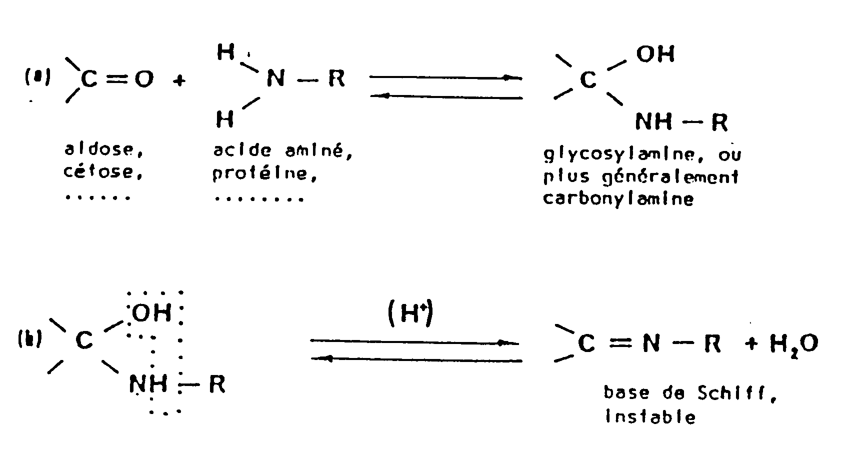

Les caractéristiques générales de la réaction de MAILLARD en font un phénomène que l'homme du métier cherche à éviter ou à limiter lorsqu'il se trouve en présence d'un sucre réducteur et d'un acide aminé.

Contrairement aux directions vers lesquelles on s'est orienté jusqu'à maintenant, la présente invention utilise les caractéristiques de la réaction de MAILLARD pour limiter la solubilité d'un ou de plusieurs acides aminés libres dans le but de les protéger vis-à-vis de la dégradation microbienne dans le rumen.
En fait, le procédé selon l'invention consiste à faire subir un traitement hydrothermique à un mélange d'acide aminé et de sucre réducteur, dans des conditions telles qu'il permette l'initiation d'une réaction de MAILLARD entre les deux constituants, tout en limitant cette réaction au(x) stade(s) précoce(s).
Les stades précoces de la réaction de MAILLARD (base de Schiff notamment) permettent de conserver l'acide aminé intact. Etant donné la réversibilité des réactions en jeu, cet acide aminé pourra reprendre sa forme initiale dans la suite du transit intestinal et jouer pleinement son rôle au niveau sanguin.

Les proportions des différents constituants en présence seront adaptées pour obtenir un rendement optimal. Le ou les acides aminés ainsi que le sucre réducteur seront mélangés avec un support alimentaire tel qu'une farine de lupin, par exemple, avant de subir l'opération de cuisson-extrusion.

A partir de ces généralités, on a mis au point un traitement hydrothermique susceptible de permettre la préparation d'un complexe alimentaire destiné à l'alimentation des ruminants, assurant la protection des acides aminés libres vis-à-vis de la dégradation microbienne et leur libération au cours du transit intestinal.

### Principe de préparation du complexe alimentaire

La protection du ou des acides aminés est obtenue par la condensation d'une molécule d'acide aminé et d'une molécule d'un sucre portant une fonction réductrice (carbone anomérique) avec formation d'un complexe (base de Schiff notamment) qui constitue une des premières étapes de la réaction de MAILLARD.

Le procédé consiste à préparer, dans des proportions optimales (une fonction aminée pour une fonction carbonyle), un mélange d'acides aminés et de sucre sur un support alimentaire, puis à traiter thermiquement le mélange selon le procédé de cuisson-extrusion, dans des conditions adaptées pour limiter la formation du complexe au(x) stade(s) précoce(s) de la réaction générale de MAILLARD.

### 1- Choix du support

L'utilisation à des fins alimentaires du complexe selon l'invention qui renferme le ou les acides aminés implique de choisir un support qui présente de bonnes qualités nutritionnelles. En outre, cette matière première doit se prêter au procédé de traitement par cuisson-extrusion : elle ne doit pas être trop riche en matière cellulosique et ne doit pas contenir, de préférence, plus de 20 % d'amidon (au-delà de cette teneur en amidon, la cuisson-extrusion provoque une expansion de la matière qui accroît sa sensibilité aux attaques microbiennes).

La graine de lupin broyée constitue un excellent support. Le lupin (espèce Lupinus albus L.) est une graine protéagineuse riche en protéines (370 à 420 g/kg de Matière Sèche MS) mais pauvre en lysine et déficiente en acides aminés soufrés et en tryptophane. Le lupin renferme aussi une teneur en matières grasses non négligeable (100 g/kg MS), ce qui lui confère une valeur énergétique élevée : 20,9 Mjoules/kg de MS (5 Mcal/kg MS).
Bien que dépourvu de sucres réducteurs, le lupin contient des glucides cytoplasmiques constitués en grande partie d'oligosaccharides (110 g/kg MS).

Le tourteau de soja ou le gluten-meal sont aussi techniquement intéressants (Tables de l'alimentation des bovins, ovins et caprins, INRA Diffusion, Tec. et Doc. Lavoisier, Paris 1989).

### 2- Choix du sucre réducteur

N'importe quel sucre, ose ou diholoside (aldose, cétose, acide uronique, disaccharide réducteur), peut être utilisé, à condition qu'il renferme un carbone anomérique lui conférant un caractère réducteur.

On pourra ainsi utiliser du glucose, du xylose, du lactose ...

Pour des raisons économiques et pratiques cet apport de sucre réducteur se fera de préférence sous la forme de poudre de lactosérum déshydratée.
Le lactosérum, ou "petit lait", est un sous-produit de l'industrie laitière et plus particulièrement des industries fromagères. Un litre de lactosérum issu du lait de vache contient 40 à 57 g de lactose, soit environ 80 % de la matière sèche totale. Le lactose est un diholoside (bêta-D galactopyranosyl-(1-4) bêta D glycopyranose) qui renferme un carbone anomérique. Le lactosérum dont la composition est représentée dans le tableau I ci-après contient en outre des protéines et des matières grasses que le ruminant est capable de bien valoriser.

**TABLEAU I**

| Composition de la poudre de lactosérum | |
|---|---|
| Composition (%) | Lactosérum sec |
| Protéines | 12- 14 |
| Matières grasses | 0,7 - 1,3 |
| Lactose | 78 - 81 |
| Cendres | 7,7 - 8,7 |

### 3- Le ou les acides aminés

Tous les acides aminés libres, naturels ou produits par l'industrie (acides aminés de synthèse) sont susceptibles d'être incorporés dans ce complexe alimentaire, en raison du groupement alpha aminé qu'ils renferment.

Dans certains cas il sera intéressant d'utiliser un mélange d'acides aminés.

Les acides aminés retenus peuvent par exemple être la lysine et la méthionine. La lysine est un acide aminé essentiel qui peut se présenter sous la forme de chlorydrate de lysine. Cet acide aminé basique comporte deux groupements NH₂ : un en position alpha et un en position epsilon.

La méthionine, autre acide aminé essentiel, peut se présenter sous forme de DL méthionine ; elle comporte un groupement NH₂ en position alpha.

### 4- Le traitement hydrothermique

Le procédé de cuisson-extrusion consiste à comprimer un produit et à élever sa température dans une chambre de compression, puis à le détendre brutalement à l'extrémité d'une filière. L'élévation de température provoque la cuisson de ses composants ; la détente en sortie de filière peut provoquer l'expansion de l'amidon, si le produit en contient, du fait de la libération brutale de la vapeur d'eau qu'il renferme.

Le procédé de cuisson-extrusion a été retenu pour réaliser le traitement hydrothermique du complexe alimentaire pour deux raisons :
- il s'agit d'un procédé qui assure un traitement en continu,
- sa souplesse permet facilement d'adapter les paramètres de traitement aux objectifs fixés.

Les appareils utilisés sont des extrudeurs constitués d'un fourreau dans lequel le produit est entraîné par une ou plusieurs vis, puis détendu par un orifice de faible diamètre : la filière. La cuisson se produit au fur et à mesure que le produit progresse dans le fourreau de l'appareil et l'expansion s'effectue à l'orifice de la filière.

Les temps de traitement, température, pression et humidité sont adaptés pour favoriser l'apparition d'une réaction de MAILLARD ; ils sont également adaptés pour l'obtention des caractéristiques optimales désirées.

### Exemple

la préparation du complexe alimentaire commence par le mélange intime des trois constituants :
- farine de lupin (espèce Lupinus albus) (CANA, 44 ANCENIS, FRANCE).
- acide aminé : chlorhydrate de Lysine (EUROLYSINE, 75 PARIS, FRANCE).
- sucre réducteur : poudre de lactosérum (RENTAL, 31 COLOMIER, FRANCE).

Ce mélange peut être fait en mélangeuse horizontale ; il est de préférence réalisé dans des proportions voisines de 10/1/3 en poids. Le rapport 1/3 de lysine et lactosérum a été retenu pour optimiser le mélange ; le rapport 10/1/3 de lupin, lysine et lactosérum a été retenu pour faciliter l'extrusion du produit.

L'opération de cuisson-extrusion est réalisée en cuiseur ou extrudeur bivis (type BC 45, CLEXTRAL, 42 FIRMINY, FRANCE). Ce cuiseur extrudeur est équipé d'un fourreau d'une longueur de 750 mm ; il est conçu pour traiter la matière à de hautes pressions et températures. La vitesse des vis et leur géométrie peuvent être modifiées aisément.

Le fourreau est composé de trois modules de 250 mm ; les modules sont assemblés entre eux par des colliers.
Le premier module (250 mm) est équipé d'un orifice d'alimentation, d'un circuit interne de refroidissement avec 6 trous, d'un thermocouple en fer/constantan (constituant une zone de régulation), relié au panneau de contrôle pour la lecture et le contrôle de la température.
Les autres modules de 250 mm sont équipés d'un circuit interne de refroidissement (4 trous), de résistances de 1,8 kw et d'un thermocouple en fer/constantan pour la régulation de la température.
Un module intermédiaire est équipé de deux orifices pour permettre l'injection de vapeur.
Les vis sont composées d'un ensemble d'éléments assemblés sur une paire d'arbres cannelés et pouvant être interchangés suivant la matière à travailler.

Les paramètres du traitement appliqué sont les suivants :
- pH : environ 6
- pression : environ 80 bars
- température d'extrusion : environ 150°C en sortie de filière
- temps de traitement : entre 15 et 25 secondes, de préférence 20 secondes
- taux d'humidité : entre 5 et 15 % (on ajoute de l'eau ou de la vapeur d'eau en fonction de l'humidité intrinsèque résiduelle du mélange).
On travaille de préférence à un taux d'humidité voisin de 10 % ; on veillera de toutes façons à ne pas dépasser 20 % d'humidité.

A la sortie de la filière, le complexe alimentaire présente la couleur jaune caractéristique de la farine de lupin extrudé.
En différant le refroidissement de 4 à 5 minutes, une couleur brune commence à apparaître ; à ce moment le produit doit être refroidi pour bloquer les réactions aux stades précoces de la réaction de MAILLARD.

Le produit obtenu peut ensuite subir une opération de granulation en vue d'une administration dans la ration alimentaire des animaux.

### Résultats

Les caractéristiques de solubilité des composés azotés rendent compte de leur aptitude à être dégradés dans le rumen (VERITE R., JOURNET M. & JARRIGE R. (1979) "A new system for the protein feeding of ruminants". The PDI system. Liv. Prod. Sci., 6:349-367.
LINDBERG J.E., CLASON C., CISZUK P. & Den BRAVER E. (1982) "Buffer-soluble and short-term in sacco degradable crude protein in relation to ruminal ammonia concentration in sheep". Swedish J. Agric. Res. 12:77-82.
STERN M.D. & SATTER L.D. (1982) "In vivo estimation of protein degradability in the rumen. Protein requirements for cattle". Symposium. OWENS F.N., Ed. Oklahoma State Univer., Stillwater.
STERN M.D. & SATTER L.D. (1984) "Evaluation of nitrogen solubility and the dacron bag technique as methods for estimating protein degradation" J. Anim. Sci., 58(3):714-724).

La solubilité du ou des acides aminés du complexe alimentaire est déterminée par la recherche de la quantité d'azote total (Nt) (méthode de VERDOUW H., Van ECHTELD C.J.A. et DEKKERS E.M.J. (1977) "Ammonia Determination based on indophenol formation within sodium salicylate". Water Res., 12:399-402) et par la proportion d'azote soluble (Ns) et insoluble (Nns) (méthode de VERITE R. et DEMARQUILLY C. (1978). "Qualité des matières azotées des aliments pour ruminants" dans : "La vache laitière", INRA Publ. PARIS, 143-158).
* A l'état brut, sans traitement particulier, 100 % de l'azote du chlorhydrate de lysine se présente sous forme soluble.
* Après traitement par cuisson-extrusion dans les conditions indiquées ci-avant :
   a) mélange poudre de lupin/chlorhydrate de lysine : 100 % de l'azote du chlorhydrate de lysine se présente sous forme soluble.
   b) mélange poudre de lupin/chlorhydrate de lysine/poudre de lactosérum (proportions 10/1/3) : seulement 20 % de l'azote du chlorhydrate de lysine se présentent sous une forme soluble.

Ces résultats montrent que 80 % de la lysine traitée a été insolubilisée et que cette insolubilisation est liée au traitement utilisé, en association avec un sucre réducteur.

D'autre part, la méthode des bilans sur vaches laitières fistulées à trois niveaux (rumen, duodénum, iléon) montre que le produit est bien digéré au niveau de l'intestin.

Le procédé selon l'invention diminue la dégradabilité des acides aminés dans la panse ; en conséquence, il augmente la quantité des produits azotés qui arrivent au niveau de l'intestin. D'autre part, ces produits sont aussi bien digérés que lorsqu'il n'y a pas de protection.

Un tel procédé peut donc être utilisé pour la protection des acides aminés de synthèse notamment, en vue d'une amélioration du taux protéique dans le lait ou d'une amélioration de la production de protéines par les animaux traités.

Le complexe alimentaire selon l'invention peut être incorporé dans la ration alimentaire des vaches laitières à titre d'ingrédient ; il peut également être incorporé dans les aliments concentrés produits dans l'industrie.

A cet effet, un mélange de farine de lupin, de chlorydrate de lysine de DL méthionine et de poudre de lactosérum, traité selon le procédé exposé ci-avant, pourra très bien convenir. Les proportions des composés dans le mélange seront adaptées en fonction des critères d'optimisation définis précédemment et en fonction des besoins des animaux.

### Résultats illustrant les effets du complexe alimentaire, obtenu selon le procédé

Exemple : Comparaison des résultats zootechniques obtenus sur 2 lots de 10 vaches pendants 13 semaines (6e à 18e semaine de lactation).
Les deux lots ont reçu quotidiennement la même alimentation (Ensilage de maïs + foin + aliment concentré énergétique et azoté) mais pour le lot expérimental 0,5 kg d'aliment concentré est remplacé par 0,5 kg du complexe obtenu selon le procédé. Ce complexe est constitué, pour 20 kg extrudés, d'un mélange de 12 kg de farine de lupin, de 6 kg de poudre de lactosérum, de 1 kg de chlorydrate de lysine et de 1 kg de DL méthionine.

Le mélange est traité par cuisson-extrusion à 153°C. Les animaux du lot traité ont reçu par jour 25 g de lysine et 25 g de méthionine.

| | Lot témoin | Lot traité | Ecart (pts) | % Variation |
|---|---|---|---|---|
| Taux Protéique (g/L) | 29.60 | 30.2 | +0.6 | +2.0 |
| Taux Butyreux (g/L) | 35.97 | 34.54 | -1.43 | -4.0 |
| Lait produit (kg/vache/jour) | 36,25 | 39.21 | +2.96 | +8.2 |
| Lait total produit (kg/vache) | 3298 | 3568 | +270 | +8.2 |
| Matières Protéiques totales produites (kg/vache) | 97.62 | 107.75 | +10 | +10.4 |
| Matières Grasses totales produites (kg/vache) | 118.63 | 123.24 | +5 | +3.9 |

L'apport du complexe alimentaire améliore le taux protéique de 2 % et abaisse le taux butyreux de 4 %. La production de lait est améliorée de 8 %, tandis que la quantité de protéines produite dans le lait est augmentée de 10,4 %.

## Revendications

1. Procédé de protection d'un acide aminé libre vis-à-vis de la dégradation ruminale, caractérisé en ce qu'il consiste à complexer ledit acide aminé avec un sucre réducteur au moyen d'un traitement hydrothermique conduit par cuisson-extrusion avec un support alimentaire, lequel traitement entraîne une condensation d'une molécule d'acide aminé et d'une molécule de sucre.

2. Procédé selon la revendication 1, caractérisé en ce qu'il consiste à faire subir un traitement hydrothermique à un mélange d'acide(s) aminé(s) et de sucre réducteur, les conditions dudit traitement étant adaptées pour permettre l'initiation d'une réaction de MAILLARD entre les deux constituants et pour limiter cette réaction aux stades précoces de ladite réaction de MAILLARD.

3. Procédé selon l'une quelconque des revendications 1 ou 2, caractérisé en ce qu'il consiste à préparer un mélange d'acide(s) aminé(s) et de sucre réducteur dans des proportions correspondant à une fonction aminée pour une fonction carbonyle.

4. Procédé selon l'une quelconque des revendications 1 à 3, caractérisé en ce qu'il consiste à traiter le mélange d'acide(s) aminé(s) et de sucre réducteur dans un cuiseur extrudeur pendant un temps compris entre 15 et 25 secondes, sous 80 bars de pression, avec une température de sortie filière de 150°C et avec un taux d'humidité du mélange de 10 %.

5. Procédé selon l'une quelconque des revendications 1 à 4, caractérisé en ce qu'il consiste à différer le refroidissement du mélange à la sortie de la filière d'extrusion jusqu'à apparition d'une légère couleur brune caractéristique de la présence d'une réaction de MAILLARD.

6. Complexe alimentaire susceptible d'être obtenu par le procédé selon l'une quelconque des revendications 1 à 5.

7. Complexe alimentaire selon la revendication 6, caractérisé en ce qu'il comporte de la farine de lupin comme support alimentaire.

8. Complexe alimentaire selon l'une quelconque des revendications 6 ou 7, caractérisé en ce qu'il est obtenu en utilisant de la poudre de lactosérum à titre d'apport de sucre réducteur.

9. Complexe alimentaire selon les revendications 7 et 8, caractérisé en ce qu'il est obtenu par cuisson-extrusion d'un mélange de farine de lupin, de chlorhydrate de lysine, de DL-méthionine et de poudre de lactosérum, dans des proportions répondant aux besoins des animaux.

## Claims

1. A process for the protection of a free amino acid against ruminal degradation, characterised in that it consists in complexing the said amino acid with a reducing sugar using a hydrothermal treatment conducted by boiling-extrusion with a feed support, whereby the said treatment causes condensation of a molecule of amino acid and of a molecule of sugar.

2. A process according to claim 1, characterised in that it consists in applying a hydrothermal treatment to a mixture of amino acid(s) and of reducing sugar, whereas the conditions of the said treatment are suited in order to allow a MAILLARD's reaction to take place between both components and to limit this reaction to the precocious stages of the said MAILLARD's reaction.

3. A process according to any of the claims 1 or 2, characterised in that it consists in preparing a mixture of amino acid(s) and of reducing sugar in proportions corresponding to an amino function for a carbonyl function.

4. A process according to any of the claims 1 to 3, characterised in that it consists in treating the mixture of amino acid(s) and of reducing sugar in a boiler-extruder for a time ranging between 15 and 25 seconds, under 80 bar pressure, at a die outlet temperature of 150°C and with a humidity rate of the mixture of 10 %.

5. A process according to any of the claims 1 to 4, characterised in that it consists in differing the cooling of the mixture at the outlet of the extrusion die until the production of a light brown colour, typical of the presence of a MAILLARD's reaction.

6. A feed complex liable to be obtained by the process according to any of the claims 1 to 5.

7. A feed complex according to claim 6, characterised in that it comprises lupinus flour as feed support.

8. A feed complex according to any of the claims 6 or 7, characterised in that it is obtained by using lactoserum powder to supply the reducing sugar.

9. A feed complex according to claims 7 and 8, characterised in that it is obtained by boiling-extrusion of a mixture of lupinus flour, lysine hydrochloride, DL-methionine and lactoserum powder, in proportions meeting the requirements of the animals.

## Patentansprüche

1. Verfahren zum Schützen einer freien Aminosäure gegen Abbau im Pansen von Wiederkäuern, dadurch gekennzeichnet, daß es darin besteht, die genannte Aminosäure mit einem Reduktionszucker in einen Komplex zu bringen mit Hilfe einer hydrothermischen Behandlung, die als Heiz-Extrusion mit einem Futterträger ausgeführt wird, wobei die Behandlung zur Kondensation eines Moleküls der Aminosäure mit einem Zuckermolekül führt.

2. Verfahren nach Anspruch 1, dadurch gekennzeichnet, daß es darin besteht, eine Mischung aus Aminosäuren und Reduktionszucker einer hydrothermischen Behandlung zu unterziehen, wobei die Bedingungen der Behandlung so abgestimmt sind, daß eine sog. MAILLARD-Reaktion zwischen den beiden Bestandteilen eingeleitet werden kann und um diese Reaktion im Frühstadium der genannten MAILLARD-Reaktion zu begrenzen.

3. Verfahren nach Anspruch 1 oder 2, dadurch gekennzeichnet, daß es darin besteht, eine Mischung aus Aminosäuren und Reduktionszucker in einem Mischungsverhältnis zu schaffen, das einer Aminogruppe pro Carbonylgruppe entspricht.

4. Verfahren nach einem der Ansprüche 1 bis 3, dadurch gekennzeichnet, daß es darin besteht, eine Mischung aus Aminosäuren und Reduktionszucker in einem Extrusionsdämpfer während einer Zeitdauer zwischen 15 und 25 Sekunden unter 80 bar Druck und mit einer Temperatur am Düsenausgang von 150°C und mit einem Feuchtigkeitsgrad der Mischung von 10% zu behandeln.

5. Verfahren nach einem der Ansprüche 1 bis 4, dadurch gekennzeichnet, daß es darin besteht, die Abkühlung der Mischung am Ausgang der Düse zu verzögern bis zum Erscheinen einer leicht braunen Farbe, wie sie charakteristisch ist für das Bestehen einer MAILLARD-Reaktion.

6. Futterkomplex, dadurch gekennzeichnet, daß er nach einem der Ansprüche 1 bis 5 hergestellt ist.

7. Futterkomplex nach Anspruch 6, dadurch gekennzeichnet, daß er Lupine-Mehl als Futterträger umfaßt.

8. Futterkomplex nach einem der Ansprüche 6 oder 7, dadurch gekennzeichnet, daß er erhalten wird unter Verwendung eines Milchserumpulvers in der Eigenschaft als Reduktionszucker.

9. Futterkomplex nach den Ansprüchen 7 und 8, dadurch gekennzeichnet, daß er erhalten wird durch Heiz-Extrusion einer Mischung von Lupine-Mehl, von Lysin-Chlorhydrat, von DL-Methionin und von Milchserumpulver, in auf die Bedürfnisse von Tieren abgestimmten Proportionen.
